# EUROPÄISCHE PATENTSCHRIFT

(11) **EP 1 869 505 B1**
(45) Veröffentlichungstag und Bekanntmachung des Hinweises auf die Patenterteilung: **09.03.2016**
(21) Anmeldenummer: 06725051.4
(22) Anmeldetag: 14.03.2006
(51) Int. Cl.: G01V 3/08

(54) **VERFAHREN ZUR LOKALISIERUNG VON IN EINEM MEDIUM EINGESCHLOSSENEN OBJEKTEN, SOWIE MESSGERÄT ZUR DURCHFÜHRUNG DES VERFAHRENS**
METHOD FOR LOCALISING OBJECTS CONTAINED IN A MEDIUM, AND MEASURING APPLIANCE FOR CARRYING OUT SAID METHOD
PROCEDE POUR LOCALISER DES OBJETS ENFERMES DANS UN MILIEU ET APPAREIL DE MESURE POUR LA MISE EN OEUVRE DUDIT PROCEDE

(30) Priorität: 01.04.2005 DE 102005015325
(43) Veröffentlichungstag der Anmeldung: 26.12.2007
(73) Patentinhaber: ROBERT BOSCH GMBH, 70442 Stuttgart (DE)
(72) Erfinder: SKULTETY-BETZ, Uwe, 70771 Leinfelden-echterdingen (DE); HAASE, Bjoern, 70182 Stuttgart (DE); RENZ, Kai, 70771 Leinfelden-echterdingen (DE); KRAPF, Reiner, 72770 Reutlingen (DE)
(86) Internationale Anmeldenummer: PCT/EP2006/060705
(87) Internationale Veröffentlichungsnummer: WO 2006/103164

(56) Entgegenhaltungen:
- US-A- 4 853 617
- US-A- 4 859 931
- US-A1- 2003 201 783

## Beschreibung

Die Erfindung betrifft ein Verfahren zur Lokalisierung von in einem Medium eingeschlossenen Objekten nach dem Oberbegriff des Anspruchs 1 sowie ein Messgerät, insbesondere ein handhaltbares Ortungsgerät, zur Durchführung des Verfahrens, nach Anspruch 8.

### Stand der Technik

Zur Detektion von in einem Medium, wie bspw. einer Wand, einer Decke oder einem Boden eingeschlossenen Objekten, wie bspw. elektrischen Leitungen, Wasserleitungen, Rohren, Metallständern oder auch Holzbalken, werden seit längerer Zeit Ortungsgeräte eingesetzt. Dabei finden unter anderem induktive Geräte, d.h. Geräte, die ein Magnetfeld erzeugen, welches durch die in einem Medium eingeschlossenen, metallischen Gegenstände gestört wird, Verwendung. Neben diesen induktiven Geräten werden des Weiteren kapazitive Geräte, Netzspannungsdetektoren sowie Hochfrequenzdetektoren verwendet. Bei Netzspannungsdetektoren oder auch AC-Detektoren wird lediglich ein Empfangsleiterschleifensystem verwendet, um das gewünschte Signal zu detektieren und damit ein entsprechendes Objekt zu lokalisieren.

Ein bei diesen Geräten auftretendes Problem stellt die trotz einer Kalibrierung des Messgerätes vorhandene, enorme Dynamik der verwendeten Sensoren und die damit einhergehende Variation in der Signalstärke des detektieren Messsignals dar. Um mit Metallortungsgeräten möglichst viele metallische Objekte unterschiedlicher Größe und Einlagerungstiefe, d.h. Entfernung des eingeschlossenen Objektes vom Messgerät, detektieren zu können, muss ein hoher Dynamikbereich abgedeckt werden. Neben der Tiefe der zu vermessenden Objekte in dem einschließenden Medium ergibt sich der große Dynamikbereich des Messsignals derartiger Sensoren auch aus den charakteristischen Eigenschaften des jeweils zu detektierenden Materials. So erzeugt bspw. ein tief in einer Wand befindliches Kupferkabel ein um mehrere Größenordnungen kleineres Sensor- bzw. Messsignal, als bspw. ein in 2 cm Tiefe verlegtes Eisenrohr.

Bei bekannten Ortungsgeräten, insbesondere Metall- oder Netzspannungsortungsgeräten gibt es daher häufig die Möglichkeit, die Empfindlichkeit des Sensors manuell, d.h. von einem Anwender ausgehend, nachregeln zu können. Hierzu werden bspw. Drehpotentiometer mit einem entsprechenden, am Gehäuse des Ortungsgerätes ausgebildeten Drehrad genutzt.

Bei anderen Ortungsgeräten kann die Empfindlichkeit des Sensors und somit die Stärke des detektieren Messsignals durch eine jeweilige Neukalibrierung auf die vorhandenen Objekte eingeregelt werden.

Allerdings ist es mit derartigen Geräten schwierig, unterschiedlich große Objekte, wie bspw. Kupferkabel und Stahlträger, mit einer Einstellung des Gerätes zu detektieren, bzw. genau zu lokalisieren. Eine zu große Signalstärke des detektierten Messsignals führt bspw. zu einer Übersteuerung des Empfangsverstärkers eines derartigen Sensors und ist deshalb so kritisch, weil in diesem Fall über einen weiten Bereich keine Signalzu- bzw. Abnahme mehr erkannt werden kann, die für eine genaue Lokalisierung eines eingeschlossenen Objektes zwingend notwendig ist. Ein eingeschlossenes Objekt liefert in einem solchen Fall über einen weiten lateralen Bereich Maximalausschlag des Messgerätes, sodass die genaue Lage des Objektes auch weiterhin dem Anwender unklar bleibt. Darüber hinaus können bspw. eng beieinander liegende Objekte nicht mehr als zwei getrennte Objekte erkannt werden.

Aus dem Stand der Technik sind mehrere Lösungsansätze bekannt, um Signale mit großer Dynamik zu erfassen.

Aus der DE 42 00 518 A1 ist ein Metallsuchdetektor bekannt, bei dem mittels eines mit zwei Sprudelpaaren versehen Sensors verborgenes Metall in einer Wand aufgespürt und deren Tiefe ermittelt werden kann. Die beiden Spulenpaare des Sensors der DE 4200518 A1 sind jeweils mit einem Oszillator verbunden und schwingen kontinuierlich mit unterschiedlichen Frequenzen. Die vom Metall beeinflussten Signale werden gemessen und für die Auswertung gewichtet. Eine Intensitätsanzeige des Messgerätes kennzeichnet die Lage des Metalls für einen Anwender. Zur Tiefenmessung für das verborgene Metall, d.h. zur Bestimmung der Tiefe des eingeschlossenen Gegenstandes relativ zu der Oberfläche einer Wand, eines Bodens oder dergleichen wird nach dem Aufspüren des Metalls eine Hebevorrichtung am Messgerät betätigt, die das Metallsuchgerät um einen definierten Betrag anhebt. Mittels einer nochmals durchgeführten Messung wird unter Berücksichtigung des vorgegebenen veränderten Abstands zur Wandoberfläche die Tiefe des verborgenen Metalls berechnet. Eine manuell bedienbare Markiervorrichtung ermöglicht die Kennzeichnung des Ortes der Messung bzw. des eingeschlossenen Gegenstandes.

Durch eine Wichtung des empfangenen Signals kann die Empfindlichkeit des Messgerätes der DE 4200518 A1 automatisch eingestellt werden, sodass die Lagebestimmung des verborgene Metals besonders präzise ist.

Die der Erfindung zugrunde liegende Aufgabe besteht nunmehr darin, ein Verfahren zur Lokalisierung von in einem Medium eingeschlossenen Objekten anzugeben, welches eine möglichst genaue Lokalisierung der Objekte gewährleisten kann.

Die der Erfindung zugrunde liegende Aufgabe wird gelöst durch ein Verfahren zur Lokalisierung von in einem Medium eingeschlossenen Objekten mit den Merkmalen des Anspruchs 1 bzw. durch ein Messgerät mit den Merkmalen des Anspruchs 8. US 2003/0201783 offenbart auch ein Metallsuchdetektor.

### Vorteile der Erfindung

Bei dem erfindungsgemäßen Verfahren zur Lokalisierung von in einem Medium eingeschlossenen Objekten wird ein Messsignal generiert, welches es ermöglicht, Informationen über die Lage des eingeschlossenen Objektes zu gewinnen. Dieses Signal ist beispielsweise eine in einem Empfangsleiterschleifensystem eines Sensors eines nach dem erfindungsgemäßen Verfahren arbeitenden Messgerätes induzierte Spannung. Über die relative Signalstärke kann dabei ein eingeschlossenes Objekt lokalisiert bzw. detektiert werden.

Aus dem so gewonnenen Messsignal, welches Informationen über die Lage des eingeschlossenen Objektes besitzt wird ein Ausgabesignal erzeugt, welches einem Anwender des erfindungsgemäßen Verfahrens bzw. eines nach diesen Verfahren arbeitenden Messgerätes die Unterscheidung zwischen zumindest zwei Detektionszuständen bei der Lokalisierung ermöglicht. So erzeugt das erfindungsgemäße Verfahren ein erstes Signal, welches dem Zustand, "Objekt detektiert" entspricht. Über ein zweites Signal, welches ebenfalls aus dem Messsignal generiert wird, kann ein zweiter Zustand "kein Objekt detektiert" unterschieden werden.

In vorteilhafter Weise wird bei dem erfindungsgemäßen Verfahren von dem ersten Zustand "Objekt detektiert" auf den zweiten Zustand "kein Objekt detektiert" gewechselt, falls die Größe des aktuell gemessenen Messsignals einen bereits zuvor gemessenen, lokalen Maximal-Wert des Messsignals um einen vorgegebenen ersten Prozentsatz unterschreitet.

Geräte des Standes der Technik übermitteln typischerweise die Information, dass ein Objekt detektiert worden ist, falls das Messsignal eine vorgegebene Messsignal-Schwelle zur Objekterkennung überschreitet. Eine solche feste Messsignal-Schwelle hat zur Folge, dass für den Fall, dass das Messsignal eines Objektes unterhalb dieser Schwelle liegt, kein Objekt erkannt werden kann. Handelt es sich jedoch um ein Objekt mit sehr großem Messsignal, bei dem diese feste Messsignal-Schwelle bereits sehr frühzeitig, dass heißt beispielsweise in großer Entfernung von dem zu lokalisierenden Objekt überschritten wird, kann ein Objekt zwar erkannt aber nicht besonders genau lokalisiert werden.

Das erfindungsgemäße Verfahren begrenzt nunmehr den Zustand "Objekt detektiert",,, der einem Anwender mitteilt, dass ein Objekt lokalisiert worden ist, auf eine relative Signalstärke in Bezug auf ein zuvor bei dem selben Messvorgang gemessenes Messsignal-Maximum. Wird ein Messsignal-Maximum detektiert, welches typischerweise mit der Lokalisierung eines eingeschlossenen Objektes einhergeht, so wird der Distanzbereich der dem lokalisierten, d.h. detektierten, eingeschlossenen Objekt zugeordnet wird, dadurch begrenzt, dass das gemessene Messsignal einen definierten Prozentsatz des zuvor gemessenen Messsignal-Maximums unterschreitet.

Auf diese Weise ist es beispielsweise möglich, dicht beieinander angeordnete Objekte zu differenzieren, die bei einer konstanten Messsignal-Schwelle gemäß den Verfahren des Standes der Technik zu einem Signal führen würden, welches über den gesamten Bereich der beiden eingeschlossenen Objekte oberhalb der Messsignalschwelle liegen würde.

Mit dem erfindungsgemäßen Verfahren wird daher in vorteilhafter Weise, eine genaue Lokalisierung von in einem Medium eingeschlossenen Objekten gewährleistet.

Durch die in den abhängigen Ansprüchen aufgeführten Merkmale sind vorteilhafte Weiterbildungen des erfindungsgemäßen Lokalisierungsverfahrens möglich.

In vorteilhafter Weise wird bei dem erfindungsgemäßen Verfahren von dem zweiten Zustand "kein Objekt detektiert" zu dem ersten Zustand "Objekt detektiert" gewechselt, falls die Größe des aktuell gemessenen Messsignals einen zuvor gemessenen lokalen Minimal-Wert des Messsignals um einen vorgegebenen zweiten Prozentsatz übersteigt. Der Zustand "Objekt detektiert" wird bei dem erfindungsgemäßen Verfahren somit nicht lediglich mit dem Überschreiten einer festen Messsignal-Schwelle gleichgesetzt, sondern ein Objekt gilt als identifiziert bzw. lokalisiert, das heißt das Verfahren meldet, den Zustand "Objekt detektiert", falls ein zuvor gemessenes lokales Minimum des Messsignals um einen vorgegebenen zweiten Prozentsatz überschritten wird. Durchläuft das Messsignal also ein Minimum und steigt daraufhin wiederum an, so ist davon auszugehen, dass dieser Anstieg auf ein weiteres, ebenfalls eingeschlossenes "Objekt zurückzuführen ist. Auf diese Weise wird auch die Lokalisierung von eng benachbarten, eingeschlossenen Objekten möglich.

In einer besonders vorteilhaften Ausführungsform des erfindungsgemäßen Verfahrens ist der vorgegebene erste Prozentsatz größer als der vorgegebene zweite Prozentsatz gewählt. Da der Prozentsatz beim Überschreiten des Minimum-Wertes nunmehr kleiner ist, als beim Unterschreiten des Maximum-Wertes kann beispielsweise beim wiederholten Überfahren eines Objektes, dieses noch wesentlich genauer lokalisiert werden als dies bei einem einmaligen Überfahren möglich ist. Dazu wechselt man beispielsweise die Verfahrrichtung eines das erfindungsgemäße Verfahren ausführenden Ortungsgerätes genau dann, wenn ein Wechsel des Zustandes "Objekt detektiert" auf den Zustand "kein Objekt detektiert" übermittelt wird. Aufgrund der unterschiedlichen Prozentsätze, die dem jeweiligen Zustandswechsel zugeordnet sind, lässt sich die genaue Position des Maximums des Messsignals auch lediglich über das Zustandssignal mit einer hohen Genauigkeit ermitteln, ohne dass eine Signalstärkenangabe notwendig wäre.

Durch das erfindungsgemäße Verfahren, welches eine genauere Lokalisierung von eingeschlossenen Objekten ermöglicht, kann ein Anwender eine sehr genaue Lokalisierung von eingeschlossenen Objekten allein über den Wechsel des Zustandes "Objekt detektiert" bzw. "kein Objekt detektiert" vornehmen, ohne den genauen Messsignalverlauf kennen zu müssen.

Ein nach dem erfindungsgemäßen Verfahren arbeitendes Messgerät zeigt nun nicht mehr über einen weiten Verfahrbereich den Zustand "Objekt detektiert" an. Insbesondere schränkt sich der dem lokalisierten Objekt zugewiesene Messbereich beispielsweise beim mehrfachen Wechsel der Verfahrrichtung eines Messgerätes immer weiter ein.

In einer Ausführungsform des erfindungsgemäßen Verfahrens wird vom zweiten Zustand "kein Objekt detektiert" zu dem ersten Zustand "Objekt detektiert" alternativ auch dann gewechselt, falls die Größe des aktuell gemessenen Messsignals einen vorgegebenen zweiten Schwellwert übersteigt, ohne jedoch den lokalen Minimal-Wert des Messsignals um den vorgegebenen zweiten Prozentsatz überstiegen zu haben.

Wird beispielsweise ein Messvorgang neu gestartet, so liegen keinerlei Messwerte und insbesondere keinerlei bereits gemessene Maximal- oder Minimal-Werte des Messsignals vor. In einem solchen Fall würde das erfindungsgemäße Verfahren von dem Zustand "kein Objekt detektiert" zu dem ersten Zustand "Objekt detektiert" wechseln, falls die Größe des aktuell gemessenen Messsignals den vorgegebenen Schwellwert übersteigt.

In weiterhin vorteilhafter Weise wird das Messsignal als Funktion einer lateralen Verschiebung eines Sensors gemessen. Ein solcher Sensor kann beispielsweise über eine oder mehrere Sendespulen und ein Empfangsleitersystem verfügen. In alternativen Ausführungsformen kann ein solcher Sensor beispielsweise nur über ein Empfangsleiterschleifensystem verfügen, um beispielsweise die Lokalisierung von Wechselströmen zu ermöglichen. Auch ein Kapazitiver Sensor, beispielsweise zur Holzbalkensuche ist möglich. Diese Sensoren können jeweils einzeln in ein Messgerät integriert sein, oder aber auch zu mehreren, in beliebigen Kombinationen in einem einzelnen Messgerät vereint sein. Dabei kann beispielsweise ein solches, nach dem erfindungsgemäßen Verfahrens ausgeführtes Messgerät über eine Wand verschoben werden, sodass entsprechende Objekte, wie beispielsweise Metallteile, Stromkabel oder auch Holzbalken, die in dieser Wand eingeschlossen sind, lokalisiert werden können. Jeder Position des Messgerätes wird dabei eine bestimmte Größe eines Messsignals zugewiesen.

Ein solches Messgerät zur Durchführung des erfindungsgemäßen Verfahrens, welches insbesondere als ein handhaltbares Ortungsgerät ausgebildet sein kann, weist in vorteilhafter Weise Ausgabemittel auf, die es gestatten, den jeweils gemessenen Zustand "Objekt detektiert" oder "kein Objekt detektiert" wieder zu geben. Dabei kann für jeden vorhandenen Sensor eine eigene Ausgabeeinheit vorgesehen sein, oder die Ausgabe der Zustandssignale aller im Messgerät vereinten Sensoren erfolgt über eine Zentrale Ausgabeeinheit des Messgerätes, beispielsweise ein graphisches Display. Auch eine akustische Ausgabe ist möglich. Durch die Wiedergabe des jeweiligen Zustands ("Objekt detektiert" oder "kein Objekt detektiert") einzelner Sensoren kann somit einem Anwender übermittelt werden ob sich das Messgerät im Bereich eines lokalisierten Objektes befindet und um welche Art von Objekt es sich dabei handeln könnte.

In vorteilhafter Weise erfolgt bei einem erfindungsgemäßen Messgerät die Wiedergabe des jeweiligen Zustandes "Objekt detektiert" bzw. "kein Objekt detektiert" auf optischem Wege. Hier können beispielsweise die unterschiedlichen Zustände farblich unterschiedlich codiert sein. Auch ist es möglich, die unterschiedlichen Zustände durch eine unterschiedliche Wiederholfrequenz eines optischen Signals zu unterscheiden.

Neben einer optischen Wiedergabe der Zustände ist selbstverständlich auch eine akustische Wiedergabe, beispielsweise ein in der Tonhöhe unterschiedlicher Zustand bzw. eine unterschiedliche Wiederholfrequenz eines und desselben Tones ebenso möglich. Das erfindungsgemäße Messgerät verfügt über zumindest einen Sensor, welcher mindestens ein Empfangsleiterschleifensystem, beispielsweise eine Empfangsspule aufweist. Weitere Sende- oder Empfangsspulen bzw. auch weitere Sensoren sind in anderen Ausführungsformen des erfindungsgemäßen Messgerätes ebenso möglich. Dabei ist ein solcher Sensor so abgeglichen, dass bei Lokalisierung eines Objektes eine Signalveränderung bei einer Gerätebewegung relativ zum Objekt messbar wird. Mit dem erfindungsgemäßen Verfahren bzw. mit einem das erfindungsgemäße Verfahren ausführenden Messgerät, beispielsweise einem handgehaltenen Ortungsgerät ist eine erhöhte Genauigkeit bei der Lokalisierung des in einem Medium eingeschlossenen Objektes möglich. Trotz des sehr hohen Dynamikbereiches des vom Sensor generierten Messsignals ist eine verbesserte, genaue Lokalisierung der Objekte durch die dynamische Zustandszuordnung gemäß dem erfindungsgemäßen Verfahren möglich.

Durch das erfindungsgemäße Verfahren, welches eine genauere Lokalisierung von eingeschlossenen Objekten ermöglicht, kann ein Anwender eine sehr genaue Lokalisierung von eingeschlossenen Objekten allein über den Wechsel des Zustandes "Objekt detektiert" bzw. "kein Objekt detektiert" vornehmen, ohne den genauen Messsignalverlauf kennen zu müssen.

Weiter Vorteile des erfindungsgemäßen Verfahrens bzw. eines Messgerätes zur Durchführung dieses Verfahrens sind der nachfolgenden Beschreibung eines Ausführungsbeispiels sowie den zugehörigen Zeichnungen zu entnehmen.

### Zeichnung

In der Zeichnung ist ein Ausführungsbeispiel für das erfindungsgemäße Verfahren dargestellt, das in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten und zu anderen, bzw. weiteren sinnvollen Kombinationen zusammenfassen.

Es zeigt:
- Figur 1: eine typische Messsituation zur Ortung und Lokalisierung von einem Medium eingeschlossenen Objekt in einer schematisierten Darstellung,
- Figur 2a: eine schematisierte Darstellung des Verlaufs des detektierten Messsignals sowie des wiedergegebenen Zustandes als Funktion des Ortes bei Verwendung eines Verfahrens nach dem Stande der Technik,
- Figur 2b: die dem Verlauf des Messsignals aus Figur 2a zu Grunde liegenden Messsituation einer schematisierten Darstellung,
- Figur 3a: eine schematisierte Darstellung des Verlaufs des detektierten Messsignals sowie des wiedergegebenen Zustandes als Funktion des Ortes bei Verwendung des erfindungsgemäßen Verfahrens,
- Figur 3b: die dem Verlauf des Messsignals aus Figur 3a zu Grunde liegende Messsituation in einer schematischen Darstellung,
- Figur 4: eine Detaildarstellung des Messsignalverlaufs und des daraus gewonnenen Zustandsignals in der unmittelbaren Nähe eines zu lokalisierenden Objektes in einer schematisierten Darstellung,
- Figur 5: eine perspektivische Darstellung eines möglichen Ausführungsbeispiels für ein erfindungsgemäßes Messgerät.

### Beschreibung eines Ausführungsbeispiels

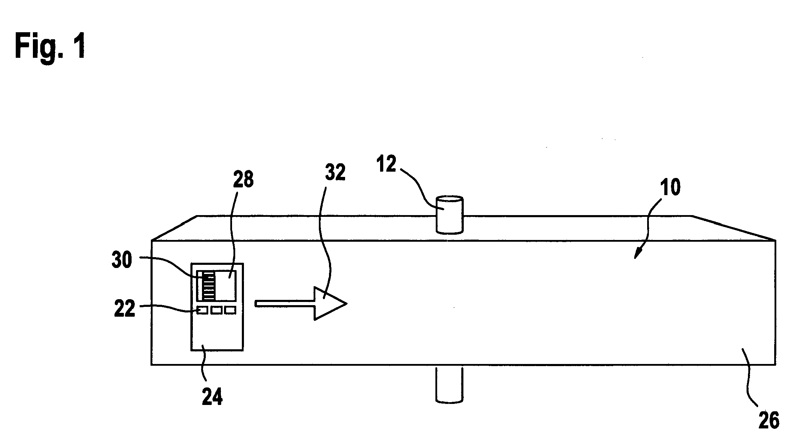

Figur 1 zeigt eine typische Mess-Situation zur Ortung von in einem Medium 10, bspw. einer Wand, einem Boden oder einer Decke eingeschlossenen Objekten. Ein Ortungsgerät 24 wird über die Oberfläche 26 eines zu untersuchenden Mediums 10 verschoben, um die Lage eines in dem Medium 10 eingeschlossenen Objektes 12 zu detektieren, d.h. zu lokalisieren. Bei einem solchen Objekt 12 kann es sich bspw. um eine elektrische Leitung, Rohre, bspw. Wasserrohre, Metallständer, oder auch andere Gegenstände, wie beispielsweise Holzbalken handeln. Ein derartiges Ortungsgerät 24 kann insbesondere einen induktiven Sensor mit zumindest einer Sendespule sowie einem als Empfangseinheit dienenden Empfangsleiterschleifensystem aufweisen. Ein solches Messgerät kann aber auch beispielsweise ein Netzspannungsdetektor sein, der lediglich ein Empfangsleiterschleifensystem, beispielsweise eine Spule als Sensor zur Detektion des Messsignals besitzt. Das Messgerät kann darüber hinaus auch eine Kombination von verschiedenen Sensoren aufweisen.

Befindet sich nun ein entsprechender Gegenstand in der Nähe der Empfangsgeometrie, so modifiziert dieser Gegenstand beispielsweise das von der Sendegeometrie erzeugte Feld, so dass ein resultierender Fluss in der Empfangsspule induziert wird, der in der Empfangsspule bzw. einem Empfangsleiterschleifensystem induzierte Fluss kann dann als Messspannung beispielsweise an der Spule oder nachgeschalteten Messverstärkern abgegriffen werden. Das detektierte Messsignal, beispielsweise die abgegriffene Messspannung U_{M} ist umso größer, je näher der induktive Sensor dem eingeschlossenen Objekt kommt.

Nähert sich ein derartiges Ortungsgerät 24 einem eingeschlossenen Objekt 12, wie dies beispielsweise durch Verfahren in Richtung des Pfeils 32 gemäß der Darstellung in Figur 1 der Fall wäre, so steigt das detektierte Messsignal an.

Insbesondere bei Geräten des Standes der Technik kann es nun zu Mess-Situationen in der Nähe des eingeschlossenen Gegenstandes 12 kommen, bei denen über einen größeren Verfahrweg des Ortungsgerätes 24 im Bereich des zu detektierenden Objektes 12 das Messsignal derart stark ist, dass über den gesamten Bereich der Maximalausschlag der Ausgabegröße, beispielsweise der abgegriffenen Messspannung U_{M} wiedergegeben wird. In diesem Fall ist eine exakte Ortung der Lage des eingeschlossenen Objektes 12 nicht möglich. Neben einer entsprechenden Ansteuerelektronik, der zugehörigen Energieversorgung sowie einer Auswerteeinheit für das detektierte Messsignal weist ein derartiges Ortungsgerät 24 bspw. auch eine grafische Anzeige 28 auf, die eine Ausgabegröße wiedergibt, die mit der Stärke des detektieren Messsignals korreliert ist. Die Ausgabegröße kann bspw. in Form eines Balkendiagramms 30 dargestellt werden, wobei die Anzahl der beleuchteten Balken zwischen einem Minimalwert und einem Maximalwert ein Maß für die Stärke des Messsignals darstellen. Neben der in Figur 1 gezeigten Darstellung der Ausgabegröße mittels eines Balkendiagramms 30 sind auch andere Ausgabeformen, insbesondere weitere optische Darstellungen, möglich. So kann beispielsweise über entsprechende Leuchtelemente 22 der Zustand "Objekt detektiert" bzw. "kein Objekt detektiert" werden.

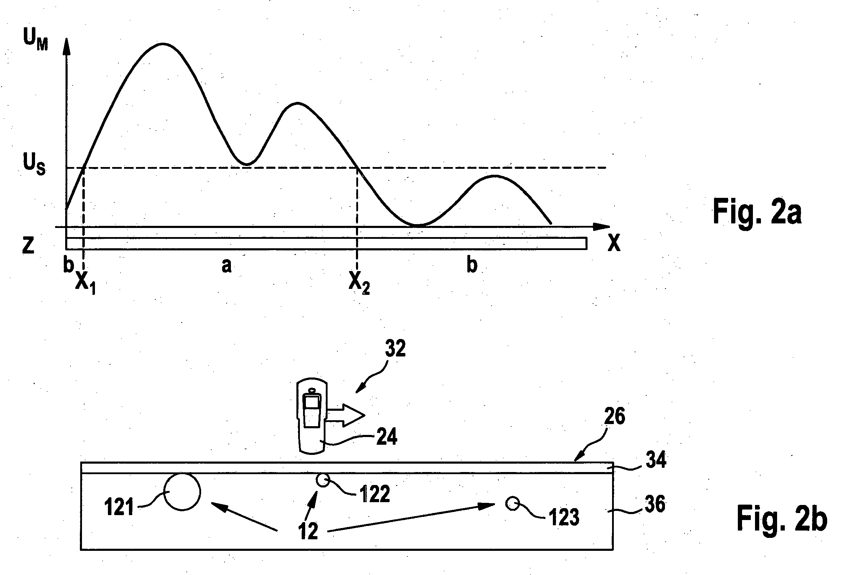

Figur 2a zeigt den Verlauf des Messsignals U_{M} und die mögliche Wiedergabe der Zustände Z "Objekt detektiert" bzw. "kein Objekt detektiert" bei einem Lokalisierungsverfahren nach dem Stand der Technik. Dabei entspricht der Zustand "Objekt detektiert" dem Bereich Z=a und der Zustand "kein Objekt detektiert" ist in Figur 2a mit Z=b gekennzeichnet.

Die zu Grunde liegende Messsituation ist ein Figur 2b wiedergegeben. In einem Medium 36 eingeschlossen sind verschiedene Objekte 12, beispielsweise Wasserleitungen, Stromleitungen oder dergleichen. Mit einem Ortungsgerät 24 soll die Lage dieser eingeschlossenen Objekte 12 lokalisiert werden. Das Ortungsgerät 24 wird dazu in Richtung des Pfeils 32 über die Oberfläche 26 beispielsweise einer Wand 34 verschoben. Figur 2a zeigt den zugehörigen Signalverlauf des Messsignals U_{M'}, welches beispielsweise die in einer Spule des Messgerätes induzierte Spannung sein kann, als Funktion der lateralen Verschiebung X des Messgerätes 24 über der Oberfläche 26 der zu untersuchenden Wand.

Ist das Messgerät mit seinem Sensor noch weit von einem eingeschlossenen Gegenstand 12 entfernt, so ist das entsprechende Messsignal noch gering. Messgeräte nach dem Stand der Technik besitzen zumeist eine Detektionsschwelle U_{S}. Liegt das Messsignal eines Objektes unterhalb dieser Schwelle U_{S}, wird das Objekt als solches nicht erkannt und kann somit nicht lokalisiert werden. Ein Messgerät gibt in diesem Fall eine Information aus, die dem Zustand "kein Objekt detektiert" (Z=b) widerspiegelt. Ein solcher Zustand "kein Objekt detektiert" wird bei der in den Figuren 2 dargestellten Messsituation in den Bereichen b des lateralen Verfahrweges X eingenommen. Nähert man sich mit einem Messgerät 24 einem in dem Medium 36 eingeschlossenen Objekt 12 an, so steigt das Messsignal UM an. Übersteigt das aktuell gemessene Messsignal U_{M} die Messsignalschwelle U_{S} so wechselt der Zustand Z von "kein Objekt detektiert" (Z=b) auf den Zustand "Objekt detektiert" (Z=a). Einem Anwender wird damit mitgeteilt, dass das Messgerät ein eingeschlossenes Objekt lokalisiert hat.

In den Verfahren des Standes der Technik gemäß Figuren 2 wird der Zustand "Objekt detektiert" über einen weiten lateralen Verfahrweg des Messgerätes 24 angezeigt, da der jeweils aktuell gemessene U_{M} in diesem gesamten Bereich oberhalb der Detektionsschwelle U_{S} liegt. Insbesondere ist es mit dem in den Figuren 2 dargestellten Verfahren nicht möglich zu detektieren, dass es sich um zwei getrennte, eingeschlossene Objekte 121 und 122 handelt, die dazu beitragen, dass das Messsignal UM über einen weiten Bereich oberhalb der Detektionsschwelle U_{S} liegt. Eine genaue Lokalisierung der Objekte 121 bzw. 122 ist mit einem derartigen Verfahren nicht möglich.

Darüber hinaus ist es mit einem derartigen Verfahren nicht möglich, ein Objekt 123 zu lokalisieren, welches ein Messsignal UM erzeugt, welches unterhalb der Messsignals-Schwelle zur Objekt-Erkennung liegt. Unterschreitet das aktuell gemessene Messsignal UM die Messsignalschwelle U_{S}, wie dies an der lateralen Position X₂ in Figur 2a dargestellt ist, so wechselt der Zustand "Objekt detektiert" (Z=a) auf den Zustand" kein Objekt detektiert". (Z=b) Da das aktuell gemessene Messsignal UM auch bei einem weiteren Verfahren des Messgerätes 34 unterhalb der Messsignal-Schwelle U_{S} bleibt, wird der zweite Zustand "kein Objekt detektiert" über den gesamten Bereich b aufrecht erhalten, obwohl das Objekt 123 einen deutlichen Signalausschlag des Messsignals U_{M} hervorruft.

Das in Figuren 2 dargestellte Verfahren nach dem Stand der Technik hat somit den Nachteil, dass ein Objekt, welches ein Messsignal erzeugt, welches unterhalb der Messsignal-Schwelle liegt, überhaupt nicht als Objekt erkannt werden kann. Handelt es sich hingegen um ein Objekt mit einem sehr großen Messsignal, bei welchem die Messsignal-Schwelle bereits frühzeitig, dass heißt auch in großer Entfernung von dem zu lokalisierendem Objekt überschritten wird, kann das Objekt zwar erkannt werden, aber eine genaue Lokalisierung bzw. auch Differenzierung unterschiedlicher Objekte ist nicht möglich.

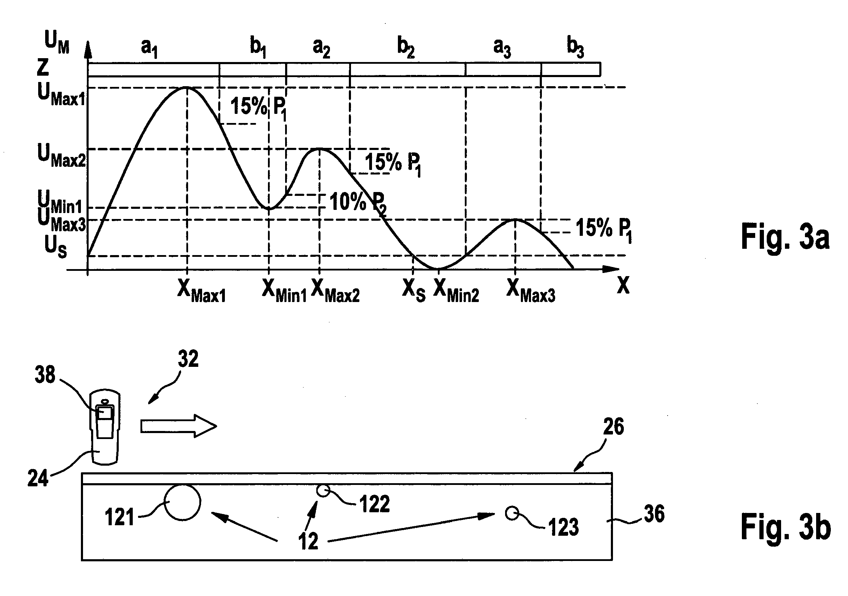

Die Figuren 3a und 3b zeigen die entsprechende Messsituation bei Verwendung des erfindungsgemäßen Verfahrens. Die Messsituation in Figur 3b entspricht der Messsituation der Figur 2b. Ein Messgerät 24, welches nach dem erfindungsgemäßen Verfahren arbeitet, wird in Pfeilrichtung 32 über die Oberfläche 26 einer Wand, eines Bodens oder einer Decke verschoben. In dem Medium 36 eingeschlossen sind Objekte 12, die beispielsweise Wasserrohre, Stromleitungen oder auch Holzbalken sein könnten.

Figur 3a zeigt zum einen den Verlauf des vom Messgerät detektierten Messsignals UM sowie ein Signal Z, welches aus dem Messsignal U_{M} generiert wird und welches zwischen den beiden Zuständen "Objekt detektiert" (Zustand Z=a) und "kein Objekt detektiert" (Zustand Z=b) unterscheidet.

Das erfindungsgemäße Verfahren zur Erkennung und Lokalisierung von Objekten verfügt über eine relativ geringe feste Schwelle U_{S}. Nur oberhalb dieser Schwelle U_{S} kann ein Objekt als solches überhaupt erkannt werden. Wird das nach dem erfindungsgemäßen Verfahren arbeitende Messgerät in Richtung des Pfeils 32 über die Oberfläche 26 verschoben, so steigt, wie in Figur 3a dargestellt, das aktuell gemessene Messsignal U_{M} an. Übersteigt das aktuell gemessene Messsignal UM die vorgegebene Messsignal-Schwelle U_{S}, so wird ein Signal erzeugt, welches den Zustand Z = a "Objekt detektiert") darstellt. Dieses Signal Z=a sagt einem Anwender, dass ein Objekt lokalisiert worden ist. Zur Wiedergabe des Zustandes Z = a bzw. des konträren Zustandes Z = b, kann beispielsweise das Farbsignal zweiter unterschiedlicher Leuchtdioden 38 verwendet werden, welche als Ausgabemittel in das Messgerät 24 integriert sind. Wechselt der Zustand Z von "Objekt detektiert" (entsprechend Zustand Z = a) auf einen Zustand "kein Objekt detektiert" (Z = b), so kann beispielsweise von einer roten Leuchtdiode auf eine grüne Leuchtdiode umgeschaltet werden, um einem Anwender zu signalisieren, dass er nunmehr mit keinem eingeschlossenen Objekt zu rechnen hat.

Bei einem weiteren Verfahren des Messgerätes 24 in Richtung des Pfeils 32 in Figur 3b steigt das Messsignal UM weiter an und der einem Anwender übermittelte Zustand bleibt auf Z=a gesetzt. An einer Position ^{x}Max1 wir ein erster Maximalwert U_{Max1} für das Messsignal UM erreicht. Das Ansteigen des Messsignals kann einem Anwender übermittelt werden oder auch nicht.

Sinkt nun bei dem erfindungsgemäßen Verfahren das aktuelle Messsignal UM beispielsweise durch weiteren Verschieben des Messgerätes in Pfeilrichtung 21 um einen vorgegebenen Prozentsatz gegenüber dem zuletzt gemessenen Maximalwert U_{Max1} wieder ab, so wechselt das Signal Z, welches den jeweiligen Zustand des Systems charakterisiert, vom Zustand a ("Objekt detektiert") auf den Zustand b ("kein Objekt detektiert").
Über die Ausgabe des Messgerätes wird einem Anwender somit signalisiert, dass er den Lokalisierungsbereich des gefundenen Objektes verlassen hat. Im Ausführungsbeispiel der Figur 3a wird vom Zustand Z = a₁ auf den Zustand Z = b₁ gewechselt, falls das aktuell gemessene Messsignal UM um 15 % gegenüber dem zuvor gemessenen Maximalwert U_{Max1} abgefallen ist. Der Wert von 15 % ist lediglich ein typischer, beispielsweise möglicher Wert, der keinerlei Einschränkung signalisieren soll. Andere Werte sind ebenso möglich. Insbesondere ist es möglich, diese Umschaltschwelle zwischen dem Zustand Z = a und dem Zustand Z = b bei unterschiedlichen Detektionsprogrammen für ein Messgerät auf das unterschiedliche Ansprechverhalten von eingeschlossenen Objekten aufgrund ihrer Materialzusammensetzung zu optimieren. Auch kann je nach verwendetem Sensorprinzip (beispielsweise induktiver Sensor, kapazitiver Sensor, AC-Sensor) dieser erste Prozentsatz P₁ optimiert werden. Zu beachten ist, dass dieser erste Prozentsatz P₁, wie ein noch zu beschreibender zweiter Prozentsatz P₂ keinen absoluten Wert darstellt, sondern bezogen ist auf den jeweils zuvor gemessenen Betrag des Maximalwertes U_{Max}, bzw. im Falle des Prozentsatzes P₂ auf einen Minimalwert Uₘᵢₙ des Messsignals U_{M}. Die jeweilige Signaländerung im Messsignal U_{M}, die notwendig ist, von einem Zustand Z = a auf einen Zustand Z = b bzw. umgekehrt umzuschalten, ist somit nicht absolut, sondern von der Größe des vorhandenen Messsignals abhängig. Auf diese Weise wird erreicht, dass auch kleinere Messsignale, die beispielsweise von kleineren Objekten, wie beispielsweise einem Objekt 122, erzeugt werden oder von einem tiefer in dem Medium eingeschlossenen Objekt, wie beispielsweise einem Objekt 123, resultieren, gegenüber einem starken Signal, wie es beispielsweise durch ein Objekt 121 erzeugt wird, hinreichend abgegrenzt ist, sodass die Lokalisierung dieser einzelnen Objekte individuell möglich ist.

Wird das Messgerät 24 in Pfeilrichtung 32 der Figur 3b über das "Objekt 121 hinaus weiter verschoben, so fällt das Messsignal U_{M} weiter ab und erreicht einen Minimalwert U_{Min1} an einer Stelle x_{Min1}. Wird das Messgerät darüber hinaus in Pfeilrichtung 32 weiter verschoben, so steigt das Messsignal aufgrund der Einwirkung des eingeschlossenen Objektes 122 wiederum an und erreicht an einer lateralen Position x_{Max2} einen zweiten lokalen Maximalwert Uₘₐₓ₂. Die Position x_{Max2} ist mit der exakten Lage des eingeschlossenen Objektes 122 zu identifizieren.

Steigt das aktuell gemessene Messsignal U_{M}, ausgehend vom zuvor detektierten Minimalwert U_{Min1} um einen vorgegebenen zweiten Prozentsatz an, so schaltet das erfindungsgemäße Verfahren den Zustand Z vom Signal von Z = b₁ ("kein Objekt detektiert") auf einen Zustand Z = a₂ ("Objekt detektiert") um. Im Ausführungsbeispiel der Figur 3a beträgt der zweite Prozentsatz P₂ 10 %, wobei diese 10 % lediglich einen typischen Wert wiedergeben sollen und keinerlei Beschränkung möglicher Werte darstellen.

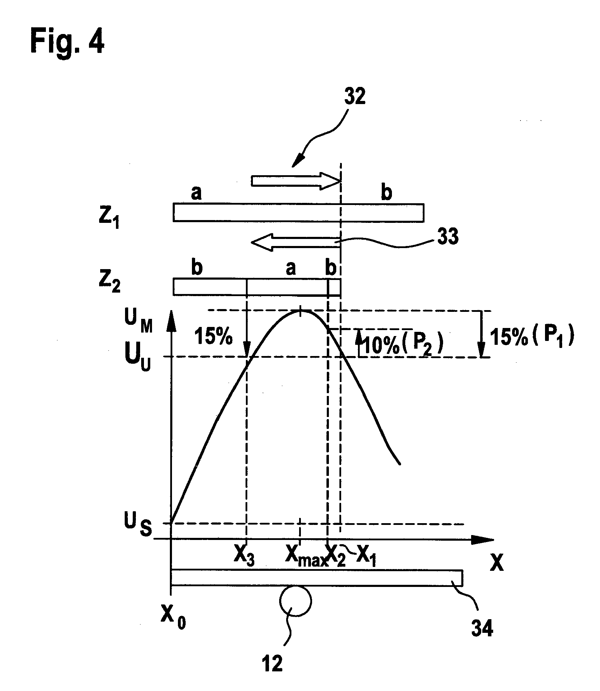

In vorteilhafter Weise ist jedoch der zweite Prozentsatz P₂ kleiner zu wählen als der erste Prozentsatz P₁, wie im Zusammenhang mit Figur 4 noch ausgeführt werden wird.

Wird das Messgerät über die Position x_{Max2} hinaus verfahren, so sinkt das Messsignal UM mit zunehmendem Abstand vom eingeschlossenen Objekt 122 wieder ab. Sinkt das aktuell gemessene Messsignal UM um den Prozentsatz P₁ (in Figur 3a beispielhaft 15 %) unter den Wert des zuvor gemessenen Maximums U_{Max2} des Messsignals ab, so schaltet das Zustandssignal Z von der Bedingung Z = a₂ auf den Zustand Z = b₂ um. Einem Nutzer wird damit signalisiert, dass er den Lokalisierungsbereich eines detektieren Objektes 122 wieder verlassen hat. Insbesondere wird diese Information "kein Objekt detektiert" generiert, auch wenn das Messsignal UM oberhalb der Messsignal-Schwelle U_{S} liegt. Auf diese Weise ist eine genauere Lokalisierung von eingeschlossenen Objekten möglich, als es bei Verwendung lediglich einer konstanten Messsignal-Schwelle möglich wäre.

Wird das erfindungsgemäße Messgerät 24 weiter in Richtung des Pfeils 32 verfahren, so wird an einer Position x_{S} das aktuell gemessene Messsignal UM kleiner als die Messsignal-Schwelle U_{S}, was jedoch zu keinerlei Änderung des Zustandes Z führt, da der Zustand und damit das Ausgabesignal bereits auf Z = b₂ ("kein Objekt detektiert") gesetzt ist.

Bei einer weiteren Verschiebung des Messgerätes 24 in Pfeilrichtung 32 über die Position x_{S} hinaus durchläuft das Messsignal UM ein weiteres lokales Minimum an der Position x_{Min2} und steigt anschließend aufgrund des spürbar werdenden Einflusses eines weiteren Objektes 123 (s. Figur 3b) wiederum an. Bei diesem Anstieg des Messsignals UM wird der Zustand von Z = b₂ auf den Zustand Z = a₃ ("Objekt detektiert") umgeschaltet, wenn das aktuell gemessene Messsignal UM den Schwellwert U_{S} überschreitet. In vorteilhafter Weise wird bei dem erfindungsgemäßen Verfahren von einem Zustand Z = b ("kein Objekt detektiert") auf einen Zustand Z = a ("Objekt detektiert") gewechselt, falls der zuletzt gemessene Minimalwert des Messsignals um einen definierten Prozentsatz P₂ überschritten wird oder die Größe des aktuell gemessenen Messsignals UM über einen festen Schwellwert U_{S} ansteigt. Da im Ausführungsbeispiel der Figur 3a der Schwellwert U_{S} kleiner ist als der 10 %-ige Anstieg des Wertes U_{Min2} des zuletzt gemessenen Minimums des Messsignals, wird der Zustand von Z = b auf Z = a bei Überschreiten des Schwellwertes U_{S} umgeschaltet.

Bei einer weiteren Verschiebung des Messgerätes 24 in Pfeilrichtung 32 steigt das aktuell gemessene Messsignal UM aufgrund der Annäherung an das eingeschlossene Objekt 123 an und erreicht an der Position x_{Max2} ein weiteres lokales Maximum, dessen Position mit der Position des eingeschlossenen Objektes 123 zu identifizieren ist. Wird das Messgerät über diese Position x_{Max2} hinaus in Pfeilrichtung 32 verfahren, so nimmt das aktuell gemessene Messsignal UM aufgrund des zunehmenden Abstandes zu dem signalgenerierenden eingeschlossenen Objekt 123 wieder ab. Fällt das aktuell gemessene Messsignal UM um einen festen Prozentsatz P₁, im Ausführungsbeispiel der Figur 3a um 15 %, gegenüber dem Wert des zuletzt gemessenen Maximalwertes U_{Max3} des Messsignals ab, so wird aufgrund der dann vorliegenden Stärke des Messsignals der Zustand Z = a₃ auf den Zustand Z = b₃ gewechselt. Einem Anwender wird damit wiederum mitgeteilt, dass er den Bereich der Lokalisierung des Objektes 123 wieder verlassen hat.

In vorteilhafter Weise ist der zweite vorgegebene Prozentsatz P₂, der als Umschaltbedingung von einem Zustand Z = b ("kein Objekt detektiert") auf einen Zustand Z = a ("Objekt detektiert") dient, betragsmäßig kleiner gewählt als der erste vorgegebene Prozentsatz P1, der als Umschaltbedingung von einem Zustand Z = a auf einen Zustand Z = b dient. Da der Prozentsatz beim Überschreiten eines Minimumwerts kleiner ist als beim Unterschreiten eines Maximumwertes kann beim wiederholten Überfahren des gleichen Objektes, dieses noch wesentlich genauer lokalisiert werden, als beim einmaligen Überfahren. Dieser Zusammenhang ist in Fig. 4 anhand eines einzelnen Objektes 12 nochmals dargestellt.

Wird das Messgerät ausgehend von der Startposition x₀ in Richtung des Pfeils 32 über die Oberfläche 26 einer Wand 34 fahren, so steigt das Messsignal UM zunächst an. Übersteigt das aktuell gemessene Messsignal UM einen Schwellwert U_{S}, so wird aus dem Messsignal ein Zustandssignal Z generiert, welches den Zustand Z₁ = a ("Objekt detektiert") darstellt. Ein Anwender wird somit darüber informiert, dass ein eingeschlossenes Objekt 12 lokalisiert worden ist. Wird das Messgerät weiter in Richtung des Pfeils 32 verfahren, so durchläuft das aktuell gemessene Messsignal UM an der Position x_{Max} einen Maximalwert, dessen Position x_{Max2} mit der genauen Position des eingeschlossenen Objekts 12 zu identifizieren ist. Wird das Messgerät über die Position x_{Max} hinaus, in Richtung des Pfeils 32 weiter über die Oberfläche 26 der Wand 34 verfahren, so fällt das aktuell gemessene Messsignal UM gegenüber dem Maximalwert U_{Max} wieder ab, ohne dass zunächst eine Änderung des Zustands Z₁ = a herbeigeführt wird. Fällt das aktuell gemessene Messsignal UM um einen vorgegebenen Prozentsatz P₁, der im Ausführungsbeispiel der Fig. 4 bei 15% liegt, gegenüber dem Wert des Maximums U_{Max} ab, so wird aus dem Messsignal U_{M} ein Zustandssignal Z₁ = b ("kein Objekt detektiert") generiert. Einem Anwender wird somit mitgeteilt, dass er den Lokalisierungsbereich des eingeschlossenen Objekts 12 verlässt.

Wechselt der Anwender die Verfahrrichtung des Messgeräts daraufhin von der Pfeilrichtung 32 auf die Pfeilrichtung 33, so dient der zuletzt gemessene Wert U_{U} (Umkehrpunkt) des Messsignals UM als gemessener Minimalwert. Wird das Messgerät nunmehr wieder in Richtung des Pfeils 33 auf das eingeschlossene Objekt 12 hin bewegt, so wird der Zustand Z₂ = b erfindungsgemäß so lange beibehalten, bis der aktuell gemessene Messwert des Messsignals UM einen Prozentsatz P₂ des zuletzt gemessenen Minimalwerts U_{U} überschreitet. Im Ausführungsbeispiel gemäß Fig. 4 ist ein zehnprozentiger Anstieg gegenüber dem zuletzt gemessenen Minimalwert U_{U} notwendig, um die Umschaltbedingung vom Zustand Z₂ = b ("kein Objekt detektiert") auf den Zustand Z₂ = a ("Objekt detektiert") zu realisieren. Dieses Signalniveau wird im Ausführungsbeispiel der Fig. 4 an einer Position X₂ erreicht. D. h. bei dem Zurückfahren des Messgeräts in Richtung des Pfeils 33 wird der laterale Bereich, über den das erfindungsgemäße Verfahren die Information und das Signal Z = a ("Objekt detektiert") einem Anwender übermittelt, weiter eingeschränkt.

Wird das Messgerät nunmehr weiter in Richtung des Pfeils 33 verfahren, so durchläuft das aktuell gemessene Messsignal U_{M} an der Position x_{Max} wiederum einen Maximalwert, um bei weiteren Verfahren in Richtung des Pfeils 33 anschließend kontinuierlich abzusinken. Fällt der Wert des aktuell gemessenen Messsignals unter einen vorgegebenen festen Prozentsatz P₁ des Maximalwerts U_{Max} ab, so wird das Signal Z von dem Zustand Z₂ = a ("Objekt detektiert") auf einen Zustand Z₂ = b gewechselt. Dieser Prozentsatz P₁ beträgt im Ausführungsbeispiel der Fig. 4 beispielsweise 15%, kann jedoch prinzipiell jeden beliebigen Wert annehmen. Vorteilhaft ist es, darauf zu achten, dass der Prozentsatz P₁ größer gewählt wird, als der Prozentsatz P₂.

Wie der Fig. 4 zu entnehmen ist, ist der Bereich über den das eingeschlossene Objekt 12 beim Zurückfahren in Richtung des Pfeils 33 lokalisiert wird (Z₂ = a) deutlich eingeschränkt gegenüber dem ursprünglichen Bereich Z₁ = a über den das Objekt beim ersten Verfahren in Pfeilrichtung 32 detektiert worden ist. Wechselt ein Anwender an der Position x₃, an der vom Zustand Objekt detektiert (Z₂ = a) auf den Zustand kein Objekt detektiert (Z₂ = b) gewechselt wurde neuerlich die Verfahrrichtung und verfährt das Messgerät ein weiteres Mal nunmehr wieder in Richtung des Pfeils 32 über das zu lokalisierende Objekt 12, so wird der Bereich, über den das Signal Z₃ = a ausgegeben wird gemäß dem erfindungsgemäßen Verfahren nochmals gegenüber dem Bereich Z₂ = a eingeschränkt.

Einem Anwender ist es somit mit dem erfindungsgemäßen Verfahren möglich, die genaue Lage eines eingeschlossenen Objekts (in Fig. 4 die Position x_{Max}) zu lokalisieren ohne den genauen Verlauf des Messsignals U_{M} zu kennen. Allein aufgrund der erfindungsgemäßen Signale zum Zustand des Systems (Z = a) entsprechend "Objekt detektiert" bzw. (Z = b) "kein Objekt detektiert" und insbesondere aufgrund der unterschiedlichen Größe der Schaltbedingungen P₁ bzw. P₂ zum Wechseln des jeweiligen Zustands ist es möglich, ein eingeschlossenes Objekt mit deutlich erhöhter Genauigkeit zu lokalisieren. So kann beispielsweise ein Messgerät nur die Ausgabe des angeleiteten Signals Z gewährleisten und trotzdem eine genaue Lokalisierung von eingeschlossenen Objekten ermöglichen. Bei alternativen Messgeräten können sowohl das Signal Z als Auch das Messsignal UM ausgegeben werden.

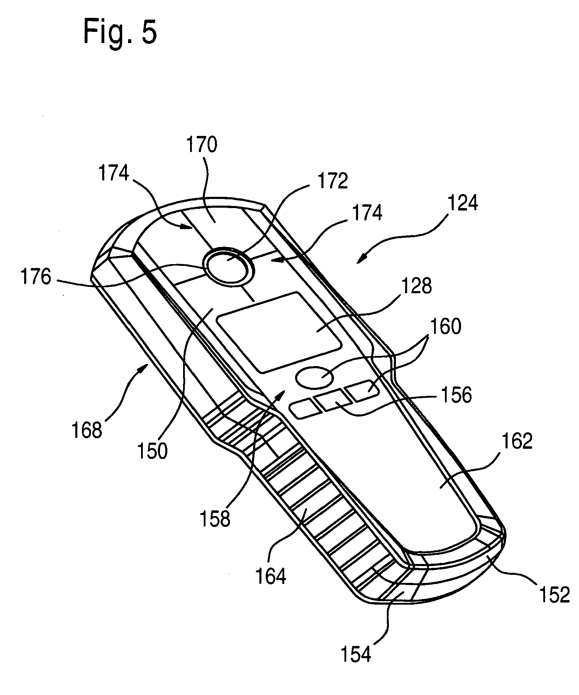

Fig. 5 zeigt ein mögliches Ausführungsbeispiel für ein erfindungsgemäße Messgerät, insbesondere ein handhaltbares Ortungsgerät nach dem erfindungsgemäßen Verfahren.

Figur 5 zeigt ein erfindungemäßes Messgerätes 124 in einer perspektivischen Übersichtsdarstellung. Das Messgerät besitzt ein Gehäuse 150, das aus einer oberen und einer unteren Halbschale 152 bzw. 154 gebildet ist. Im Inneren des Gehäuses ist zumindest ein Sensor mit einer Empfangsleiterschleifensystem, beispielsweise einer Spulenanordnung vorgesehen. Weitere Sensoren, wie beispielsweise induktive oder kapazitive Sensoren können ebenfalls im Messgerät 124 integriert sein. Darüber hinaus weist das Innere des Messgerätes 124 eine Signalerzeugungs- und Auswerteelektronik, sowie eine Energieversorgung, bspw. über Batterien oder Akkus, auf. Das Messgerät gemäß Figur 5 besitzt darüber hinaus eine Anzeige 128 zur Ausgabe eines mit dem Messsignal korrelierten Ausgabesignals. Über die Anzeige 128, bspw. eine segmentierte Balkenanzeige oder aber auch eine graphische Anzeige unter Verwendung eines LCDs, ist es möglich, die Stärke des detektierten Messsignals UM darzustellen.

Des Weiteren besitzt das erfindungsgemäße Messgerät ein Bedienfeld 158 mit einer Reihe von Bedienelementen 160, die es ermöglichen, das Gerät bspw. ein- bzw. auszuschalten, sowie gegebenenfalls einen Messvorgang bzw. einen Kalibrierungsvorgang zu starten. Über ein Bedienelement 156 kann es einem Anwender beispielsweise ermöglicht werden, die Frequenz des Messsignal zu variieren. Darüber hinaus kann auch vorgesehen sein, dass diese Variation des Messfrequenz vom Gerät automatisch vorgenommen wird und insbesondere einem Anwender nicht zugänglich ist.

Im Bereich unterhalb des Bedienfeldes 158 weist das Messgerät gemäß Figur 5 einen Bereich 162 auf, der in seiner Form und Materialgestaltung als Handgriff 164 zur Führung des erfindungsgemäßen Messgerätes ausgestaltet ist. Mittels dieses Handgriffs 164 wird das Messgerät mit seiner, dem Betrachter der Figur 5 abgekehrten Unterseite über eine Oberfläche eines zu untersuchenden Gegenstandes bzw. eines Mediums, wie bspw. der Oberfläche 26 einer Wand 10 gemäß der schematischen Darstellung in Figur 3, gerührt.

Auf der dem Handgriff 164 entgegensetzten Seite 170 des Messgerätes 124 weist dieses eine das Gehäuse durchdringende Öffnung 172 auf. Die Öffnung 172 ist konzentrisch zumindest zu dem Empfangsleiterschleifensystem 134 des Sensors angeordnet. Auf diese Weise entspricht der Ort der Öffnung 172 im Messgerät, dem Zentrum des Ortungssensors, sodass dem Anwender eines derartigen Gerätes damit auch gleichzeitig die genaue Lage eine evtl. detektierten Gegenstandes angezeigt wird. Darüber hinaus weist das Messgerät zusätzlich auf seiner Oberseite Markierungslinien 174 auf, über die das genaue Zentrum der Öffnung 172 und somit die Lage eines eingeschlossenen Gegenstandes vom Anwender lokalisiert werden kann. Die Öffnung 172 wird begrenzt durch eine teiltransparente Hülse 176, in die das Licht unterschiedlicher Leuchtdioden eingespeist werden kann. Detektiert das Messgerät ein Messsignal U_{M}, aus welchem nach dem beschriebenen Verfahren ein Zustandssignal Z=a generiert wird, d.h. eine Objekt wurde lokalisiert, so kann die Hülse beispielsweise rot beleuchtet werden, um einem Anwender mitzuteilen, dass ein Objekt am Ort der Öffnung 172 lokalisiert worden ist und er daher von einer Bohrung an dieser Stelle absehen sollte. Wird mit dem erfindungsgemäßen Verfahren ein Signal gemäß dem Zustand Z=b generiert, so kann beispielsweise grünes Licht in die Hülse eingespeist werden, um einem Anwender zu signalisieren, dass kein Objekt lokalisiert worden ist, und er beispielsweise eine Bohrung im Bereich der Öffnung 172 des Messgerätes vornehmen kann.

In alternativen Ausführungsformen eines erfindungsgemäßen Messgerätes kann die Widergabe der Zustand Z auch direkt über Ausgabemittel erfolgen, wie beispielsweise Leuchtdioden, die sichtbar im oder am Gehäuse des Messgerätes angeordnet sind.

Darüber hinaus ist es auch möglich und vorteilhaft, einen Sensor nach dem erfindungsgemäßen Verfahren direkt oder als Anbauteil in eine Werkzeugmaschine, bspw. in ein Bohrwerkzeug zu integrieren, um einen Anwender ein sicheres Arbeiten mit dieser Maschine zu ermöglichen.

Das erfindungsgemäße Verfahren bzw. ein nach diesem Verfahren arbeitendes Messgerät ist nicht auf das in den Figuren dargestellte Ausführungsbeispiel beschränkt.

Insbesondere ist das erfindungsgemäße Verfahren nicht beschränkt auf die Verwendung lediglich einer Sendespule bzw. eines Empfangsleiterschleifensystems. Mehrfachsysteme sind ebenso möglich. Ein solches Ortungsgerät könnte beispielsweise auch einen Kompensationssensor auf. Ein derartiger Sensor umfasst bspw. drei Spulen, wobei eine erste Sendespule an einem ersten Sender angeschlossen ist, eine gegebenenfalls vorhandene zweite Sendespule an einem zweiten Sender angeschlossen ist und ein als Empfangsspule dienendes Empfangsleiterschleifensystem an einem Empfänger angeschlossen ist. Die beiden Sendespulen werden von ihren Sendern mit Wechselströmen einer Frequenz f_{M} sowie entgegengesetzter Phase gespeist. Dabei induziert die erste Sendespule in der Empfangsspule einen Fluss, der dem von der zweiten Sendespule in der Empfangsspule induzierten Fluss entgegengesetzt ist. Beide in der Empfangsspule induzierten Flüsse kompensieren sich somit gegenseitig, sodass der Empfänger keinerlei Empfangssignal in der Empfangsspule detektiert, falls sich kein externer metallischer Gegenstand in der Nähe einer solchen Spulenanordnung befindet. Der von den einzelnen Sendespulen in der Empfangsspule erregte Fluss Φ hängt von verschiedenen Größen, wie beispielsweise der Windungszahl und der Geometrie der Spulen sowie von Amplituden der in den beiden Sendespulen eingespeisten Ströme und ihrer gegenseitigen Phasenlage ab. Diese Größen sind bei derartigen Detektoren letztendlich so zu optimieren, dass bei Abwesenheit eines metallischen Gegenstandes in der Empfangsspule ein möglichst geringer Fluss Φ angeregt wird.

Alternativ ist es auch möglich, nur eine Sendespule zu verwenden und das Empfangswindungssystem derart im Raum zu positionieren, dass bei Abwesenheit metallischer Objekte in den Empfangsleiterstrukturen keine Spannung induziert wird.

Auch die Kombination mehrerer Sensoren im einem Messgerät ist möglich.

## Patentansprüche

1. Verfahren zur Lokalisierung von in einem Medium (10) eingeschlossenen Objekten (12), bei dem ein mit dem eingeschlossenen Objekt (12) korreliertes Messsignal (U_{M}) generiert wird, aus welchem ein Signal (Z) erzeugt wird, welches zumindest eine Unterscheidung zwischen einem ersten Zustand "Objekt detektiert" (Z=a) und zumindest einem zweiten Zustand "kein Objekt detektiert" (Z=b) ermöglicht, **dadurch gekennzeichnet, dass** von dem ersten Zustand "Objekt detektiert" auf den zweiten Zustand "kein Objekt detektiert" gewechselt wird, falls die Größe des aktuell gemessenen Messsignals (U_{M}) einen zuvor gemessenen, lokalen Maximalwert (U_{Max,n}) des Messsignals um einen vorgegebenen ersten Prozentsatz P₁ unterschreitet.

2. Verfahren nach Anspruch 1, **dadurch gekennzeichnet, dass** von dem zweiten Zustand "kein Objekt detektiert" zu dem ersten Zustand "Objekt detektiert" gewechselt wird, falls die Größe des aktuell gemessenen Messsignals (U_{M}) einen zuvor gemessenen lokalen Minimalwert (U_{Min,n}) des Messsignals um einen vorgegebenen zweiten Prozentsatz P₂ übersteigt.

3. Verfahren nach Anspruch 1 und 2, **dadurch gekennzeichnet, dass** der vorgegebene erste Prozentsatz P₁ größer als der vorgegebene zweite Prozentsatz P₂ gewählt wird.

4. Verfahren nach Anspruch 2, **dadurch gekennzeichnet, dass** alternativ von dem zweiten Zustand "kein Objekt detektiert" zu dem ersten Zustand "Objekt detektiert" gewechselt wird, falls die Größe des aktuell gemessenen Messsignals (U_{M}) einen vorgegebenen Schwellwert (U_{S2}) übersteigt, ohne jedoch den lokalen Minimalwert (U_{Min,n}) des Messsignals um den vorgegebenen zweiten Prozentsatz P₂ überstiegen zu haben.

5. Verfahren nach Anspruch 1, **dadurch gekennzeichnet, dass** das Messsignal (U_{M}) als Funktion einer lateralen Verschiebung (X) eines Sensors gemessen wird.

6. Messgerät, insbesondere ein handhaltbares Ortungsgerät (24,124), zur Durchführung des Verfahrens nach einem der Ansprüche 1 bis 5, mit einem Sensor, der ein mit einem eingeschlossenen Objekt (12) korreliertes Messsignal (U_{M}) generiert, mit einer Auswertelektronic, mittels der ein Signal (Z) erzeugt wird, welches zumindest eine Unterscheidung zwischen einem ersten Zustand "Objekt detektiert" (Z=a) und zumindest einem zweiten Zustand "kein Objekt detektiert" (Z=b) ermöglicht, **dadurch gekennzeichnet, dass** das Messgerät (24,124) über Ausgabemittel (28,38,176) verfügt, die es gestatten, den jeweils gemessenen Zustand (Z) wiederzugeben.

7. Messgerät nach Anspruch 6, **dadurch gekennzeichnet, dass** die Wiedergabe des Zustands (Z) optisch erfolgt.

8. Messgerät nach einem der Ansprüche 6 oder 7, **dadurch gekennzeichnet, dass** das Messgerät (24,124) über zumindest einen Sensor mit mindestens einem Empfangsleiterschleifensystem verfügt.

## Claims

1. Method for localizing objects (12) enclosed in a medium (10) in which a measurement signal (U_{M}) correlated with the enclosed object (12) is generated, from which a signal (Z) is generated which enables at least a distinction to be made between a first state "object detected" (Z=a) and at least one second state "no object detected" (Z=b), **characterized in that** the system changes from the first state "object detected" to the second state "no object detected" if the magnitude of the measurement signal (U_{M}) currently measured stays below a previously measured local maximum value (U_{Max,n}) of the measurement signal by a predetermined first percentage P₁.

2. Method according to Claim 1, **characterized in that** the system changes from the second state "no object detected" to the first state "object detected" if the magnitude of the measurement signal (U_{M}) currently measured exceeds a previously measured local minimum value (U_{Min,n}) of the measurement signal by a predetermined second percentage P₂.

3. Method according to Claims 1 and 2, **characterized in that** the predetermined first percentage P₁ is selected to be greater than the predetermined second percentage P₂.

4. Method according to Claim 2, **characterized in that** alternatively the system changes from the second state "no object detected" to the first state "object detected" if the magnitude of the measurement signal (U_{M}) currently measured exceeds a predetermined threshold value (U_{S2}) but without having exceeded the local minimum value (U_{Min,n}) of the measurement signal by the predetermined second percentage P₂.

5. Method according to Claim 1, **characterized in that** the measurement signal (U_{M}) is measured as a function of a lateral displacement (X) of a sensor.

6. Measuring device, especially a hand-held positioning device (24, 124) for carrying out the method according to one of Claims 1 to 5, having a sensor which generates a measurement signal (U_{M}) correlated with an enclosed object (12), and having evaluation electronics which are used to generate a signal (Z) which at least makes it possible to distinguish between a first state "object detected" (Z=a) and at least one second state "no object detected" (Z=b), **characterized in that** the measuring device (24, 124) has output means (28, 38, 176) which allow the state (Z) measured in each case to be reproduced.

7. Measuring device according to Claim 6, **characterized in that** the state (Z) is reproduced visually.

8. Measuring device according to one of Claims 6 and 7, **characterized in that** the measuring device (24, 124) has at least one sensor having at least one receive wire loop system.

## Revendications

1. Procédé de localisation d'objets (12) englobés dans un fluide (10), dans lequel un signal de mesure (U_{M}) corrélé à l'objet (12) incorporé est produit,
un signal (Z) qui permet au moins de distinguer entre une première situation "objet détecté" (Z=a) et au moins une deuxième situation "aucun objet détecté" (Z=b) étant formé à partir de ce signal de mesure, **caractérisé en ce que**
on bascule de la première situation "objet détecté" à la deuxième situation "aucun objet détecté" au cas où le niveau du signal de mesure (U_{M}) effectivement mesuré est inférieur d'un premier pourcentage P₁ prédéterminé à une valeur maximale locale (U_{Max,n}), mesurée précédemment, du signal de mesure.

2. Procédé selon la revendication 1, **caractérisé en ce que** l'on bascule de la deuxième situation "aucun objet détecté" à la première situation "objet détecté" au cas où le niveau du signal de mesure (U_{M}) effectivement mesuré dépasse d'un deuxième pourcentage P₂ prédéterminé une valeur minimale locale (U_{Min,n}) mesurée précédemment du signal de mesure.

3. Procédé selon les revendications 1 et 2, **caractérisé en ce que** le premier pourcentage prédéterminé P₁ est supérieur au deuxième pourcentage prédéterminé P₂.

4. Procédé selon la revendication 2, **caractérisé en ce qu'**en variante, on bascule de la deuxième situation "aucun objet détecté" à la première situation "objet détecté" au cas où le niveau du signal de mesure (U_{M}) effectivement mesuré dépasse une valeur de seuil (U_{S2}) prédéterminée sans cependant avoir dépassé du deuxième pourcentage prédéterminé P₂ la valeur minimale locale (U_{Min,n}) du signal de mesure.

5. Procédé selon la revendication 1, **caractérisé en ce que** le signal de mesure (U_{M}) est mesuré en tant que fonction d'un décalage latéral (X) d'un capteur.

6. Appareil de mesure, notamment appareil portable de localisation (24, 124), en vue de la mise en oeuvre du procédé selon l'une des revendications 1 à 5, et présentant un capteur qui forme un signal de mesure (U_{M}) corrélé à un objet (12) incorporé, et une électronique d'évaluation au moyen de laquelle un signal (Z) qui permet de distinguer au moins entre une première situation "objet détecté" (Z=a) et au moins une deuxième situation "aucun objet détecté" (Z=b) est formé,
**caractérisé en ce que**
l'appareil de mesure (24, 124) dispose de moyens de sortie (28, 38, 176) qui permettent de transmettre la situation mesurée (Z).

7. Appareil de mesure selon la revendication 6, **caractérisé en ce que** la transmission de la situation (Z) s'effectue optiquement.

8. Appareil de mesure selon l'une des revendications 6 ou 7, **caractérisé en ce que** l'appareil de mesure (24, 124) dispose d'au moins un capteur qui présente au moins un système à boucle de conducteur de réception.
